# EUROPEAN PATENT SPECIFICATION

(11) **EP 3 363 407 B1**
(45) Date of publication and mention of the grant of the patent: **18.09.2019**
(21) Application number: 18150976.1
(22) Date of filing: 10.01.2018
(51) Int. Cl.: A61C 8/00

(54) **DENTAL IMPLANT**
ZAHNIMPLANTAT
IMPLANT DENTAIRE

(30) Priority: 15.02.2017 IT 201700016540
(43) Date of publication of application: 22.08.2018
(73) Proprietor: Permedica S.p.A., 23807 Merate (LC) (IT)
(72) Inventor: PEREGO, Marco, 23807 MERATE (LC) (IT)
(74) Representative: Corradini, Corrado

(56) References cited:
- WO-A1-2015/145450
- WO-A2-2007/059038
- US-A1- 2014 272 791
- US-A1- 2016 089 481

## Description

### TECHNICAL FIELD

The present invention relates to a medical device for use in the dentistry field. The invention has been developed with special concern for a dental implant, but can also concern braces, crowns, bridges and other similar medical devices.

### PRIOR ART

Dental implants have been widely used for some years now in the dentistry field. The most common dental implants are of the single-component or bicomponent type. In this latter case, the dental implant comprises an anchoring component particularly adapted, in use, to anchor the implant to the bone structure of a patient, e.g., the jaw, and a prosthesis component, fitted, following a healing period, on the relative anchoring component. For example, a dental crown with aesthetic and functional characteristics can be made, to measure, on the prosthesis component.

The dental implants are made with metal materials, preferably pure titanium, because besides providing considerable biocompatibility, this material has high osteoconductive characteristics which permit speeding up the osseointegration process of the implant.

To further improve the biocompatibility and osseointegration characteristics, surface treatment is known with different materials such as, e.g., modified silicate glass and ceramic, silica, aluminum oxide, zirconium oxide or titanium oxide. Dental implants provided with surface treatments are known from WO 2015/145450 A1 and US 2016/0089481 A1.

Despite this, the need was felt in the dental implantology sector to further improve the characteristics of the medical devices of known type, making an implant which speeds up and optimizes the osseointegration process thus reducing the risk of marginal bone resorption around the implant, reduces the risk of corrosion and breakage of the implant and considerably reduces the bacterial adhesion and proliferation which is the main cause of peri-implantitis and the failures of the implants.

One of the main objects of the present invention is to satisfy such needs and overcome the drawbacks of the devices of known type.

### DRAWINGS

Further characteristics and advantages of the invention will appear more evident by reading the following description provided by way of example with reference to the attached figures, wherein:

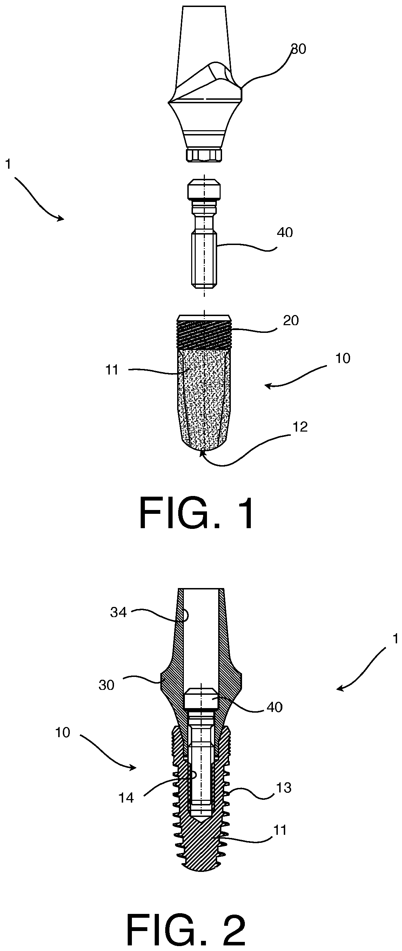

- figure 1 is a schematic view of the dental implant 1 of the present invention;
- figure 2 is a section view of the medical device of figure 1;
- figure 3 is an axonometric view of a screw of the dental implant of the present invention; and
- figure 4 is a partial axonometric view of the connection between a screw and a prosthetic component according to the present invention.

### BEST WAY OF CARRYING OUT THE INVENTION

The dental implant 1 according to the present invention is a medical device to be used in odontostomatological surgery operations for the reconstruction of a single tooth or a complete dental arch. The dental implant 1 comprises an anchoring body (or simply implant), particularly adapted to be inserted by a dentist inside a jaw or mandibular bone with the function of artificial root for the reconstruction of the tooth. The anchoring body represents the implantable component of the dental implant 1 and therefore comes directly into contact with the bone tissue. The fixing of the anchoring body is achieved by means of osseointegration with direct contact with the mandibular and/or jaw bone.

In the embodiment shown in the figures, the anchoring body consists of a screw 10 (or implant) adapted to anchor the dental implant to a bone structure. The screw 10 is characterized by an upper neck 20, an end conical portion 24, a main portion 11, cylinder or cone shaped, and a tapered apical extremity 12. The outer surface 13 of the main portion 11 of the screw 10 is threaded preferably, but not limitatively with a self-tapping thread with trapezoidal profile, to favor its insertion inside the bone tissue and the fixing of the medical device 1.

The screw 10 also comprises an inner cavity 14 adapted to house and fix a connection element, as will appear more clearly below.

The screw 10 is commonly made of commercially pure titanium in titanium alloy, or, more rarely, of other metal materials.

The dental implant 1 of the present invention also comprises a prosthetic component, which can include various elements used for the purpose of allowing the reconstruction of the outer part of the tooth or as a support for mobile and fixed dental prostheses. The prosthetic component can comprise, for example, but is not limited to, one or more of the following elements: healing cap screw, transmucosal screw, healing abutment, stump, temporary aesthetic stump, burn-out stump, CPA stump, CPA stump protection cap, transfer.

In the embodiment shown in the figures, the prosthetic component includes, for example, an abutment body 30 (commonly called abutment), on which, in use, a dental prosthesis is fitted. The abutment body 30 comprises an inner cavity 34.

The medical device 1 also comprises a connection element, typically a connection screw 40, arranged between the abutment body 30 and the screw 10, inserted in the cavity 14 of the screw 10 and in the cavity 34 of the abutment body 30 respectively, and adapted, in use, to connect and tighten the abutment body 30 to the screw 10.

According to a particularly advantageous characteristic of the present invention, at least the screw implant 10 is coated, using the technique of "Physical Vapor Deposition" (PVD), with a coating of titanium-niobium nitride, i.e., a ceramic coating obtained from a combination of the following chemical elements: Titanium, Nitrogen and Niobium. The surface chemical analysis of the titanium-niobium nitride coating layer comprises the following chemical elements in the following percentages: Titanium (Ti) 12.7%; Nitrogen (N) 12.3%; Oxygen (O) 16.6%; Carbon (C) 55.4%; Niobium (Nb) 2.9%.

Prior art has shown how the titanium-niobium nitride coating is easy to apply on any metal material, has high-hardness characteristics (above 2,000 HV), high resistance to abrasion and high adhesion to the substrate.

The coating is applied on the medical device, preferably, but not limitatively, in a thickness between 3 and 6 µm, preferable an average thickness of 4.5 µm.

Thanks to such solution, the titanium-niobium nitride coating layer only alters the surface characteristics of the medical device, leaving unaltered the characteristics of the metal substrate of the implant.

According to one characteristic of the present embodiment, all the threaded outer surface 13 of the screw 10 is roughened by means of sandblasting and is subsequently coated with the titanium-niobium nitride coating layer comprising a combination of at least the following elements: Titanium, Nitrogen and Niobium. Surface roughening can be achieved by means of a sandblasting treatment, for example, but not limitatively, with magnesium and calcium carbonate.

A metal surface treated this way improves the osteoconductivity and the osseointegration of the implant and makes it less susceptible to bio-contamination compared to implants with different surface treatments.

A further advantage of the present invention consists in the fact that the titanium-niobium nitride coating layer behaves like an insulating barrier between the metal substrate and the organic environment, thus making the medical device, having the coating layer according to the present invention, more resistant to the corrosion caused by the organic environment. The medical device, provided with the coating layer according to the present invention, can also therefore be implanted in patients with known hypersensitivity to the metal element in the alloy of which the medical device is made (typically titanium) because such coating acts as a barrier to the release of the metal ions from the metal substrate.

The advantages of the titanium-niobium nitride coating layer therefore, to summarize, comprise:
- high biocompatibility;
- high osseointegration;
- reduction in the release of metal ions from the metal substrate and consequent reduction in the risk of allergic reactions;
- reduction in the risk of bacterial adhesion and proliferation and consequent reduction in the risk of peri-implantitis;
- high surface hardness;
- high resistance to abrasion;
- long-term chemical stability;
- high adhesion to the substrate.

According to a further embodiment of the present invention, the prosthetic component, for example, but not limitatively, the abutment body 30, is also coated with a titanium-niobium nitride coating layer, as previously described.

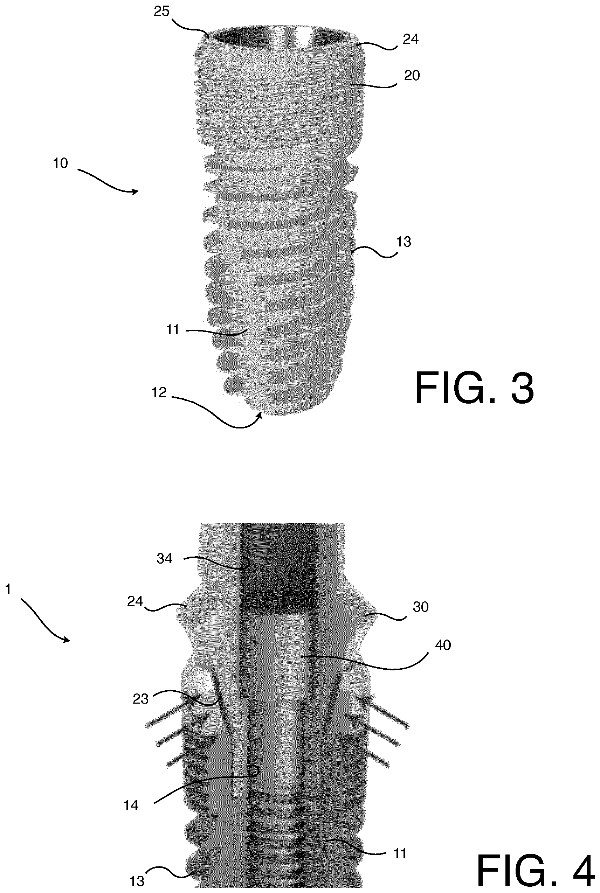

With particular reference to the figures 3 and 4, according to another embodiment of the present invention, the implant 10 has an upper neck 20 having the end portion 24 conical and an inner cavity 14 with a conical inner surface 23 which acts as a support and connection base with the abutment body 30.

This way, the diameter of the cross section of the implant 10 at the connection platform 25 is less than the diameter of the main body of the implant 11, the support base between the abutment body 30 and the implant 10 thus appearing moved towards the longitudinal central axis of the implant 10 instead of being line-to-line with a constant diameter between implant 10 and abutment body 30. This way, new bone growth is favored above the neck 20 of the implant 10 and the soft gum tissues have a chance to grow around the recess between the screw 10 and the abutment body 30, or abutment, so as to seal such area, particularly at risk as regards the transit and adhesion and proliferation of the oral cavity bacteria.

According to this embodiment of the present invention furthermore, the conical support base between the screw implant 10 and the abutment body 30 (or abutment) would allow reducing the empty micro interstices between the two parts and, consequently, reducing the possibility of transit of bacteria coming from the oral cavity towards the interface between the implant 10 and the bone. Always according to this embodiment, the outer surface of the conical portion 24 of the upper neck 20 has a gloss finish, so as to reduce bacterial adhesion and favor the new growth of gum tissue, and the outer surface of the cylindrical portion of the upper neck 20 has micro threads along its entire extension so as to increase its primary stability and favor osseointegration reducing to the utmost the risk of bone resorption around the area of the upper neck 20.

Naturally, the shapes and sizes of the anchoring part and of the fitting part can be different to those described and illustrated here without because of this falling outside the scope of the present invention.

All the details are replaceable with other technically equivalent elements.

Similarly, the materials employed, as well as the contingent dimensions and shapes, may be any according to requirements without thereby abandoning the scope of protection of the following claims.

## Claims

1. Dental implant comprising an anchoring body (10) adapted to anchor the dental implant to a bone structure, said anchoring body (10) comprising a threaded outer surface (13), **characterized in that** said threaded outer surface (13) is coated with a titanium-niobium nitride coating layer comprising a combination of at least the following elements: Titanium, Nitrogen and Niobium.

2. Dental implant according to claim 1, **characterized in that** the coating layer is applied on the outer surface (13) using the technique of physical vapor deposition.

3. Dental implant according to claim 2, **characterized in that** said threaded outer surface (13) is a rough surface.

4. Dental implant according to claim 3, **characterized in that** the anchoring body (10) include an upper neck (20), a main portion (11), cylinder or cone shaped, and a tapered apical extremity (12).

5. Dental implant according to claim 4, **characterized in that** the upper neck (20) has a conical inner surface (23).

6. Dental implant according to claim 5, **characterized in that** the outer surface of the upper neck (20) has micro threads along its entire extension.

7. Dental implant according to claim 6, **characterized in that** the dental implant (1) also comprises a prosthetic component (30) engaged to the anchoring body (10).

8. Dental implant according to claim 7, **characterized in that** the prosthetic component (30) is also at least partly coated with a titanium-niobium nitride coating layer comprising a combination of at least the following elements: Titanium, Nitrogen and Niobium.

9. Dental implant according to any one of the preceding claims, **characterized in that** the coating layer has a thickness between 3 and 6 µm.

10. Dental implant according to claim 9, **characterized in that** the coating layer comprises at least the following chemical elements in the following percentages: Titanium (Ti) 12.7%; Nitrogen (N) 12.3%; Oxygen (O) 16.6%; Carbon (C) 55.4%; Niobium (Nb) 2.9%.

## Patentansprüche

1. Zahnimplantat, umfassend einen Verankerungskörper (10), der angepasst ist, um das Zahnimplantat an einer Knochenstruktur zu verankern, wobei der Verankerungskörper (10) eine äußere Gewindefläche (13) umfasst, **dadurch gekennzeichnet, dass** die äußere Gewindefläche (13) mit einer Titan-Niob-Nitrid-Beschichtungsschicht beschichtet ist, die eine Kombination aus mindestens den folgenden Elementen umfasst: Titan, Stickstoff und Niob.

2. Zahnimplantat nach Anspruch 1, **dadurch gekennzeichnet, dass** die Beschichtungsschicht unter Verwendung der Technik der physikalischen Dampfabscheidung auf die Außenfläche (13) aufgebracht ist.

3. Zahnimplantat nach Anspruch 2, **dadurch gekennzeichnet, dass** die äußere Gewindefläche (13) eine raue Oberfläche ist.

4. Zahnimplantat nach Anspruch 3, **dadurch gekennzeichnet, dass** der Verankerungskörper (10) einen oberen Hals (20), einen zylinder- oder kegelförmigen Hauptabschnitt (11) und ein konisches apikales Ende (12) aufweist.

5. Zahnimplantat nach Anspruch 4, **dadurch gekennzeichnet, dass** der obere Hals (20) eine konische Innenfläche (23) aufweist.

6. Zahnimplantat nach Anspruch 5, **dadurch gekennzeichnet, dass** die Außenfläche des oberen Halses (20) entlang ihrer gesamten Ausdehnung Mikrogewinde aufweist.

7. Zahnimplantat nach Anspruch 6, **dadurch gekennzeichnet, dass** das Zahnimplantat (1) auch eine prothetische Komponente (30) umfasst, die mit dem Verankerungskörper (10) in Eingriff steht.

8. Zahnimplantat nach Anspruch 7, **dadurch gekennzeichnet, dass** die prothetische Komponente (30) auch mindestens teilweise mit einer Titan-Niob-Nitrid-Beschichtungsschicht beschichtet ist, die eine Kombination aus mindestens den folgenden Elementen umfasst: Titan, Stickstoff und Niob.

9. Zahnimplantat nach einem der vorherigen Ansprüche, **dadurch gekennzeichnet, dass** die Beschichtungsschicht eine Stärke zwischen 3 und 6 µm aufweist.

10. Zahnimplantat nach Anspruch 9, **dadurch gekennzeichnet, dass** die Beschichtungsschicht mindestens die folgenden chemischen Elemente in den folgenden Prozentsätzen umfasst: Titan (Ti) 12,7 %; Stickstoff (N) 12,3 %; Sauerstoff (O) 16,6 %; Kohlenstoff (C) 55,4 %; Niob (Nb) 2,9 %.

## Revendications

1. Implant dentaire comprenant un corps d'ancrage (10) conçu pour fixer l'implant dentaire dans une structure osseuse, ledit corps d'ancrage (10) comprenant une surface extérieure filetée (13), **caractérisé en ce que** ladite surface extérieure filetée (13) est revêtue d'une couche de revêtement en nitrure de titane niobium comprenant une combinaison des éléments suivants, au minimum : titane, azote, niobium.

2. Implant dentaire selon la revendication 1, **caractérisé en ce que** la couche de revêtement est appliquée sur la surface extérieure (13) à l'aide de la technique de dépôt physique en phase vapeur.

3. Implant dentaire selon la revendication 2, **caractérisé en ce que** ladite surface extérieure filetée (13) est une surface rugueuse.

4. Implant dentaire selon la revendication 3, **caractérisé en ce que** le corps d'ancrage (10) comprend un col supérieur (20), une partie principale (11), en forme de cône ou de cylindre, et une extrémité apicale conique (12).

5. Implant dentaire selon la revendication 4, **caractérisé en ce que** le col supérieur (20) dispose d'une surface intérieure conique (23).

6. Implant dentaire selon la revendication 5, **caractérisé en ce que** la surface extérieure du col supérieur (20) dispose de micro-filetages sur toute sa longueur.

7. Implant dentaire selon la revendication 6, **caractérisé en ce que** l'implant dentaire (1) comprend également un composant prothétique (30) en prise avec le corps d'ancrage (10).

8. Implant dentaire selon la revendication 7, **caractérisé en ce que** le composant prothétique (30) est également revêtu, au moins en partie, d'une couche de revêtement en nitrure de titane niobium comprenant une combinaison des éléments suivants, au minimum : titane, azote, niobium.

9. Implant dentaire selon l'une quelconque des revendications précédentes, **caractérisé en ce que** la couche de revêtement a une épaisseur comprise entre 3 et 6 µm.

10. Implant dentaire selon la revendication 9, **caractérisé en ce que** la couche de revêtement comprend au moins les éléments chimiques suivants, selon les pourcentages suivants : titane (Ti) 12,7 % ; azote (N) 12,3 % ; oxygène (0) 16,6 % ; carbone (C) 55,4 % ; niobium (Nb) 2,9 %.
